# EUROPÄISCHE PATENTANMELDUNG

(11) **EP 2 899 215 A1**
(43) Veröffentlichungstag der Anmeldung: **29.07.2015**
(21) Anmeldenummer: 14152468.6
(22) Anmeldetag: 24.01.2014
(51) Int. Cl.: C08F 6/02, C08F 8/04, C08F 8/26

(54) **Verfahren zur Aufarbeitung eines Gemischs (G), das eine organische Komponente (A), die mindestens eine Halogen-Kohlenstoffbindung aufweist, und eine Übergangsmetallkomponente (B) enthält**

(71) Anmelder: BASF SE, 67056 Ludwigshafen (DE)
(72) Erfinder: Fleischmann, Sven, 67069 Ludwigshafen (DE); Gumz, Hannes, 01309 Dresden (DE); Lopez Villanueva, Francisco Javier, 67105 Schifferstadt (DE)
(74) Vertreter: Baier, Martin

(57) **Zusammenfassung**

Verfahren zur Aufarbeitung eines Gemischs (G), das eine organische Komponente (A), die mindestens eine Halogen-Kohlenstoffbindung aufweist, und eine Übergangsmetallkomponente (B) enthält, durch Inkontaktbringen des Gemischs (G) mit einer Mischung (M), die eine Polyacrylsäurekomponente (C) und Zink enthält.

## Beschreibung

Die vorliegende Erfindung betrifft ein Verfahren zur Aufarbeitung eines Gemischs (G), das eine organische Komponente (A), die mindestens eine Halogen-Kohlenstoffbindung aufweist, und eine Übergangsmetallkomponente (B) enthält, durch Inkontaktbringen des Gemischs (G) mit einer Mischung (M), die eine Polyacrylsäurekomponente (C) und Zink enthält.

Gemische, die organische Verbindungen, die mindestens eine Halogen-Kohlenstoffbindung aufweisen, und eine Übergangsmetallkomponente enthalten, sind prinzipiell bekannt. Solche Gemische fallen beispielsweise bei kupferkatalysierten Polymerisationsreaktionen an. Ein prinzipielles Problem zur Aufarbeitung solcher Gemische ist die Abtrennung der Kupferkomponente vom eigentlichen Produkt, d.h. dem Polymer. Die Kupferkomponente führt im Allgemeinen zu einer unerwünschten Einfärbung des Produkts. Zudem ist die Abtrennung der Kupferkomponente auch aus gesundheitlichen Aspekten erstrebenswert und bei elektronischen Anwendungen unabdingbar. Bei der radikalischen Polymerisation von Monomeren in Gegenwart von Kupferkomponenten und einem organischen Halogenid als Initiator, werden im Allgemeinen Polymere enthalten, die mindestens eine Halogen-Kohlenstoffbindung aufweisen. Diese Halogenendgruppen-haltigen Polymere sind aus gesundheitlichen Aspekten ebenfalls nicht unbedenklich, da beispielsweise bei der Verbrennung solcher Polymere unter Umständen giftige Stoffe freigesetzt werden können. Des Weiteren beeinflussen die Halogenendgruppen im Polymer auch dessen Abbaubarkeit.

Die vorstehend beschriebenen Gemische werden beispielsweise bei der radikalischen Polymerisation von Monomeren erhalten, die Kohlenstoff-Kohlenstoff-Doppelbindungen enthalten. Geeignete Polymerisationsverfahren sind beispielsweise die sogenannten ATRP-Polymerisationsverfahren (Atom Transfer Radical Polymeryzation) oder die sogenannten SET-LRP-Polymerisationsverfahren (Single Electron Transfer-Living Radical Polymerization). Diese Verfahren sind beispielweise in Single-Electron Transfer and Single-Electron Transfer degenerative Transfer-Living Radical Polymerization Chem. Rev. 2009, 109, 5069-5119 beschrieben.

Auch die WO 2013/030261 beschreibt die Herstellung von Polymeren durch kontrollierte radikalische Polymerisation. Auf die Problematik der im resultierenden Polymer enthaltenen Halogenendgruppen geht die WO 2013/030261 nicht ein. Zur Verringerung des Restgehalts von Kupfer- bzw. Kupferionen aus dem bei der Polymerisation enthaltenen Polymer schlägt die WO 2013/030261 Filtration, Ausfällen, Ionentauscher sowie elektrochemische Verfahren vor.

Canturk et al. (Journal of Polymer Science Part A: Polymer Chemistry 2011, 49, 3536-3542) beschreibt ein Verfahren zur simultanen Abtrennung von Kupferkomponenten und zur Entfernung von Halogenendgruppen aus einem Polymer. Das Polymer wird hierbei durch Polymerisation von Methylmethacrylat in Toluol in Gegenwart von Ethylbromacetat als Initiator und Kupferbromid als Kupferkomponente hergestellt, wobei zusätzlich ein Ligand eingesetzt wird.

Bei der Polymerisation wird Brom auf das entstehende Polymer übertragen. Als Endprodukt der Polymerisation von Methylmethacrylat wird daher ein Polymer der nachfolgenden Formel 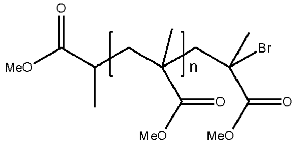 erhalten, das eine Brom-Kohlenstoffbindung (Bromendgruppe) aufweist. Das Gemisch enthält darüber hinaus eine dem Kupfer-haltigen Katalysator entstammende Kupferkomponente, die Kupfer in elementarer Form sowie Kupfer den Oxidationsstufen + I bzw. + II enthalten kann. Das erhaltene Reaktionsgemisch weist daher eine grüne bis bläuliche Farbe auf. Diese Farbe schlägt sich auch nach Aufarbeitung des Reaktionsgemischs im Polymer nieder.

Zur simultanen Entfernung der Halogenendgruppen und des Kupfers schlägt Canturk et al. vor, das bei der Polymerisation erhaltene Gemisch mit elementarem Zink, Essigsäure und Silikagel in Kontakt zu bringen. Das Gemisch aus der Polymerisation wird hierzu diskontinuierlich mit Zinkpulver, Silikagel und Essigsäure gerührt und nachfolgend filtriert. Als Modellverbindung zur Abspaltung der Bromendgruppen setzt Canturk et al. Ethylbromacetat (EBA) ein.

Die positiv geladenen Kupferverbindungen werden durch Zink zu elementarem Kuper (Oxidationsstufe 0) reduziert und an dem Silikagel adsorbiert, so dass es nachfolgend zusammen mit der Modellverbindung (EBA) mit dem Silikagel abfiltriert werden kann. Die Bromendgruppen werden mittels einer *Wurtz*-Reaktion abgespalten und durch Wasserstoff ersetzt.

Die Entfernung der Halogenendgruppen folgt hierbei der nachfolgenden Reaktionsgleichung:

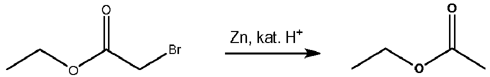

Das von Canturk et al. beschriebene Verfahren ermöglicht eine effektive Entfernung der Kupferkomponenten sowie eine effektive Abspaltung der Halogenendgruppen aus dem im Reaktionsgemisch der Polymerisation erhaltenen Polymer. Das von Canturk et al. beschriebene Verfahren ist jedoch nur für den diskontinuierlichen Betrieb geeignet. Zudem lässt sich das Verfahren nur schwer im großtechnischen Maßstab durchführen. Ein weiterer Nachteil liegt im Zusatz des Essigsäure-Katalysators, der vor einer weiteren Anwendung ggf. aufwendig abgetrennt werden muss, insbesondere bei säureempfindlichen Applikationen. Außerdem erfordert das Verfahren einen relativ hohen Zusatz an Silikagel als Adsorptionsmaterial, was die Wirtschaftlichkeit der Methode nach Canturk et al. weiter reduziert.

Der vorliegenden Erfindung liegt somit die Aufgabe zugrunde, ein Verfahren zur Aufarbeitung eines Gemischs (G) bereitzustellen, das eine kontinuierliche Abtrennung der Übergangsmetallkomponente (B) sowie eine Abspaltung des Halogens aus der Halogen-Kohlenstoffverbindung der organischen Komponente (A) ermöglicht. Das Verfahren soll einfach und kostengünstig durchführbar sein und auch für den kontinuierlichen großtechnischen Betrieb geeignet sein. Das Verfahren soll insbesondere zur Aufarbeitung von Reaktionsgemischen geeignet sein, die durch eine radikalische Polymerisation von Monomeren, in Gegenwart eines Katalysators, der Kupfer enthält, eines Initiators aus der Gruppe organischer Halogenide und mindestens eines Liganden, erhältlich sind.

Gelöst wird diese Aufgabe durch das erfindungsgemäße Verfahren zur Aufarbeitung eines Gemischs (G), das eine organische Komponente (A), die mindestens eine Halogen-Kohlenstoffbindung aufweist, und eine Übergangsmetallkomponente (B) enthält, durch Inkontaktbringen des Gemischs (G) mit einer Mischung (M), die eine Polyacrylsäurekomponente (C) und Zink enthält.

Das erfindungsgemäße Verfahren hat den Vorteil, dass auf den Einsatz einer bei Raumtemperatur (20 °C) flüssigen Säure verzichtet werden kann. Bei dem von Canturk et al. beschriebenen Verfahren ist zur Erreichung sinnvoller Reaktionszeiten zwingend der Einsatz von Essigsäure erforderlich. Die Essigsäure muss nachfolgend aus dem Zielprodukt wieder entfernt werden. Dies verkompliziert das von Canturk et al. beschriebene Verfahren und führt somit zu Mehrkosten. Da im erfindungsgemäßen Verfahren auf den Einsatz von bei Raumtemperatur flüssigen Säuren verzichtet werden kann, muss diese Säure aus dem Zielprodukt nicht abgetrennt werden. Somit spart das erfindungsgemäße Verfahren einen Aufarbeitungsschritt gegenüber den im Stand der Technik beschriebenen Verfahren ein und ist daher wirtschaftlicher durchführbar.

Mit dem erfindungsgemäßen Verfahren können prinzipiell alle Gemische (G) aufgearbeitet werden, die eine organische Komponente (A) und eine Übergangsmetallkomponente (B) enthalten.

Das Gemisch (G) kann erfindungsgemäß genau eine Übergangsmetallkomponente (B) enthalten, darüber hinaus ist es auch möglich, dass das Gemisch (G) zwei oder mehrere Übergangsmetallkomponenten (B) enthält. Der Begriff "Übergangsmetallkomponente (B)" umfasst erfindungsgemäß somit genau eine Übergangsmetallkomponente (B) sowie zwei oder mehrere Übergangsmetallkomponenten (B).

Die Übergangsmetallkomponente (B) ist von Zink (Zn) in elementarer Form (Zn 0) und positiv geladener Form (Zn +II) verschieden. In einer Ausführungsform enthält das Gemisch (G) somit kein Zink (Zn) in elementarer Form (Zn 0) und positiv geladener Form (Zn +II).

Bevorzugt sind als Übergangsmetallkomponente (B) Übergangsmetalle in der Oxidationsstufe (+I) und/oder (+II), wobei die Übergangsmetallkomponente (B) zusätzlich auch Übergangsmetalle in elementarer Form (0) enthalten kann.

Bevorzugt sind als Übergangsmetallkomponente (B) Übergangsmetalle in der Oxidationsstufe (+I) und/oder (+II) deren Redoxpaare [Übergangsmetall (+II)/Übergangsmetall (0)] bzw. [Übergangsmetall (+I)/Übergangsmetall (0)] Redoxpotentiale aufweisen, die positiver als das Redoxpotential des Redoxpaars von Zink [Zink (+II)/Zn (0).

Gegenstand der vorliegenden Erfindung ist somit auch ein Verfahren, bei dem die Übergangsmetallkomponente (B) mindestens ein Übergangsmetall in der Oxidationsstufe (+I) und/oder (+II) enthält, deren Redoxpaare [Übergangsmetall (+II)/Übergangsmetall (0)] bzw. [Übergangsmetall (+I)/Übergangsmetall (0)] Redoxpotentiale aufweisen, die positiver als das Redoxpotential des Redoxpaars von Zink [Zink (+II)/ Zn (0)] sind.

Das Gemisch (G) kann erfindungsgemäß genau eine organische Komponente (A) enthalten, darüber hinaus ist es auch möglich, dass das Gemisch (G) zwei oder mehrere organische Komponenten (A) enthält. Der Begriff "organische Komponente (A)" umfasst erfindungsgemäß somit genau eine organische Komponente (A) sowie zwei oder mehrere organische Komponenten (A).

Die organische Komponente (A) weist mindestens eine Halogen-Kohlenstoffbindung auf. Die Halogen-Kohlenstoffbindung wird auch als Halogenendgruppe bezeichnet. Die organische Komponente (A) kann erfindungsgemäß genau eine Halogen-Kohlenstoffbindung (Halogenendgruppe) sowie zwei oder mehrere Halogen-Kohlenstoffbindungen (Halogenendgruppen) enthalten. Die organische Komponente (A) kann Fluor-, Chlor-, Brom-, und lod-Kohlenstoffbindungen enthalten. Anders ausgedrückt kann die organische Komponente (A) somit Fluorendgruppen, Chlorendgruppen, Bromendgruppen sowie lodendgruppen enthalten. Bevorzugt sind jedoch organische Komponenten (A), die mindestens eine Brom-Kohlenstoffbindung (Bromendgruppe) enthalten.

Das Gemisch (G) kann als organische Komponente (A) alle bekannten organischen Verbindungen enthalten, die die vorstehend beschriebenen Voraussetzungen erfüllen.

Bevorzugt als organische Komponente (A) ist jedoch ein Polymer, das mindestens eine Halogen-Kohlenstoffbindung, bevorzugt mindestens eine Brom-Kohlenstoffbindung (Bromendgruppe) enthält.

Solche Polymere können beispielsweise durch die eingangs beschriebenen ATRP-Polymerisationsverfahren oder durch die eingangs beschriebenen SET-LRP-Polymerisationsverfahren hergestellt werden.

Gegenstand der vorliegenden Erfindung ist somit auch ein Verfahren, bei dem das Gemisch (G) ein Reaktionsgemisch ist, das durch eine radikalische Polymerisation hergestellt wird, wobei die radikalische Polymerisation mindestens eines radikalisch polymerisierbaren Monomers in Gegenwart
a) mindestens eines Katalysators enthaltend die Übergangsmetallkomponente (B),
b) mindestens eines Initiators ausgewählt aus der Gruppe organischer Halogenide,
c) mindestens eines Liganden und
d) optional eines Lösungsmittels
erfolgt, und
das Gemisch (G) als organische Komponente (A), das bei der radikalischen Polymerisation erhaltene Polymer, das mindestens eine Halogen-Kohlenstoffbindung aufweist, gegebenenfalls den mindestens einen Initiator und die Übergangsmetallkomponente (B) enthält.

Die als organische Komponente (A) bevorzugten Polymere, die durch radikalische Polymerisation hergestellt werden, weisen im Allgemeinen eine mittlere Molare Masse Mn (Zahlenmittel) von 1.000 bis 1.000.000 g/mol, bevorzugt von 2.000 bis 200.000 g/mol und insbesondere von 3.000 bis 150.000 g/mol auf. Die mittleren Molmassen hängen im Allgemeinen, wie dem Fachmann bekannt ist, unter anderem von der Konzentration an Initiator ab. Mn lässt sich hierbei je nach gewünschter Anwendung des Polymeren über einen weiten Bereich einstellen.

Die als organische Komponente (A) bevorzugten Polymere weisen im Allgemeinen eine mittlere Molare Masse Mw (Gewichtsmittel) von 1.100 bis 2.000.000 g/mol, bevorzugt von 2.200 bis 300.000 g/mol und insbesondere von 3.300 bis 200.000 g/mol auf.

Die als organische Komponente (A) bevorzugten Polymere weisen im Allgemeinen eine Polydispersität PDI (Quotient aus Gewichtsmittel und Zahlenmittel der Molmassenverteilung) von 1,0 bis 2,5, bevorzugt von 1,05 bis 1,5, insbesondere von 1,1 bis 1,3 auf.

Die Bestimmung des Zahlenmittels (Mn) sowie des Gewichtsmittels (Mw) der als organische Komponente (A) bevorzugten Polymere erfolgt durch Gelpermeationschromatographie mit zwei in Reihe geschalteten 10 µm Plgel Säulen und einem DRI Detektor von Agilent. Als Eluent wird THF mit 0,1 % Trifluoressigsäure bei 35 °C verwendet, wobei die Kalibrierung der Molmassen mittels Standards der Fa. Polymer Laboratories erfolgt.

Die als organische Komponente (A) bevorzugten Polymere enthalten mindestens eine Halogen-Kohlenstoffbindung. Die Art des Halogens hängt hierbei vom eingesetzten Initiator ab. Als Initiator können organische Halogenide eingesetzt werden. Als Initiator bevorzugt sind organische Chloride und Bromide.

Als Initiator besonders bevorzugt ist ein Initiator ausgewählt aus der Gruppe bestehend aus 2,2-Dichloracetophenon, Sulfonsäurehalogeniden, Methyl-2-brompropionat, Methyl-2-chlorpropionat, 2-Brompropionnitril, 2,6-Dibromdiethylheptandionat und 2,5-Dibromadipinsäureethylester.

Insbesondere bevorzugte Initiatoren sind ausgewählt aus der Gruppe bestehend aus 2,2-Dichloracetophenon, Toluolsulfonsäurechlorid, Methyl-2-Brompropionat, 2-Brompropionnitril, 2,6-Dibromdiethylheptandionat und 2,5-Dibromadipinsäureethylester. Als Initiator am Meisten bevorzugt ist Methyl-2-brompropionat (MBP).

In Abhängigkeit von dem eingesetzten Initiator enthalten die als organische Komponente (A) bevorzugten Polymere somit mindestens eine Chlor-Kohlenstoffbindung (Chlorendgruppe) und/oder eine Brom-Kohlenstoffbindung (Bromendgruppe). Am Meisten bevorzugt enthalten die als organische Komponente (A) bevorzugten Polymere mindestens ein Brom-Kohlenstoffbindung (Bromendgruppe).

Bevorzugt sind als Übergangsmetallkomponente (B), Übergangsmetalle in der Oxidationsstufe (+I) und/oder (+II), wobei die Übergangsmetallkomponente (B) zusätzlich auch Übergangsmetalle in elementarer Form (0) enthalten kann.

Bevorzugt sind als Übergangsmetallkomponente (B) Übergangsmetalle in der Oxidationsstufe (+I) und/oder (+II) die ein positiveres Redoxpotential als Zink aufweisen.

Unter Redoxpotential wird vorliegend das Redoxpotential der Redoxpaare verstanden. Das Redoxpotential der Übergangsmetalle bezieht sich hierbei auf die Redoxpaare [Übergangsmetall (+II)/Übergangsmetall (0)] bzw. [Übergangsmetall (+I)/Übergangsmetall (0)]. Das Redoxpotential von Zink bezieht hierbei auf das Redoxpaar [Zink (+II)/ Zn (0)].

Das Redoxpotential des Redoxpaares Cu²⁺/Cu beträgt beispielsweise +0,35 V. Das Redoxpotential des Redoxpaares Zn²⁺/Zn beträgt beispielsweise -0,76V.

Als Übergangsmetallkomponente (B), ist Kupfer (Cu) besonders bevorzugt. Das Kupfer liegt hierbei in den Oxidationsstufen, Cu (+I) und/oder Cu(+II) vor. Darüber hinaus kann die Übergangsmetallkomponente (B) auch Kupfer in elementarer Form Cu (0) enthalten. Selbstverständlich können auch Mischungen von Kupfer (0), Kupfer (+I) und Kupfer (+II) eingesetzt werden.

Gegenstand der vorliegenden Erfindung ist somit auch ein Verfahren, bei dem die Übergangsmetallkomponente (B) Kupfer (Cu) in Form von Cu(I), Cu(II) oder Mischungen aus diesen enthält.

In einer besonders bevorzugten Ausführungsform wird als Übergangsmetallkomponente (B) Kupfer (0) in Form eines Feststoffs eingesetzt. Als Feststoff können Kupferdraht, Kupfergitter, Kupfernetze oder Kupferpulver eingesetzt werden. Insbesondere werden als Übergangsmetallkomponente (B) metallisches Kupfer (0) und Kupfer (+II) eingesetzt. Die als Katalysator eingesetzte Übergangsmetallkomponente (B) kann zusätzlich weitere Metalle ausgewählt aus der Gruppe bestehend aus Mangan, Nickel, Platin, Eisen, Ruthenium und Vanadium enthalten. Darüber hinaus ist es möglich, als Übergangsmetallkomponente (B) Kupferlegierungen wie Messing oder Bronze einzusetzen.

Es wird vermutet, dass sich das Kupfer (0) durch Elektronenübertrag auf die Kohlenstoff-Halogen-Bindung in Cu(I) umwandelt, das durch einen weiteren Elektronenübertrag oder Disproportionierung zu Cu(II) reagiert.

In einer weiteren bevorzugten Ausführungsform wird die Polymerisation in Gegenwart mindestens eines Liganden durchgeführt. Als Ligand sind organische Stickstoffverbindungen geeignet. Bevorzugt ist der Ligand ausgewählt aus der Gruppe bestehend aus Hexamethylen-Tris-(2-aminoethyl)amin, Tris-(2-aminoethyl)amin, 2,2-dipyridin und Polyimin.

Gegenstand der vorliegenden Erfindung ist somit auch ein Verfahren, bei dem das mindestens eine radikalisch polymerisierbare Monomer mindestens ein Monomer der allgemeinen Formel (I) 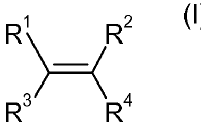 ist,
mit
- R¹: H, C₁-C₄-Alkyl,
- R²: H, C₁-C₄-Alkyl,
- R³: H, C₁-C₄-Alkyl,
- R⁴: C(=O)OR⁵ , C(=O)NHR¹⁵, C(=O)NR⁵R⁶, OC(=O)CH₃, C(=O)OH, CN, Aryl, Hetaryl, C(=O)OR⁵OH, C(=O)OR⁵Si(OR⁵)₃, Halogen, NHC(O)H, P(=O)(OR⁷)₂, 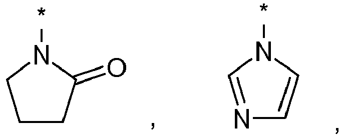
- R⁵: C₁-C₂₀-Alkyl,
- R¹⁵: C₁-C₂₀-Alkyl,
- R⁶: C₁-C₂₀-Alkyl,
- R⁷: H, C₁-C₂₀-Alkyl, wobei die Substituenten R⁵, R⁶, R⁷ und R¹⁵ jeweils an beliebiger Position durch ein oder mehrere Heteroatome unterbrochen sein können, wobei die Anzahl dieser Heteroatome nicht mehr als 10 beträgt, und/oderjeweils an beliebiger Position, allerdings nicht mehr als fünfmal durch NR⁸R⁹, C(=O)NR⁸R⁹, C(=O)R¹⁰, C(=O)OR¹⁰, SO₃R¹⁰, CN, NO₂, C₁-C₂₀-Alkyl, C₁-C₂₀-Alkoxy, Aryl, Aryloxy, Heterocyclen, Heteroatome oder Halogen substituiert sein können, wobei diese ebenfalls maximal zweimal mit den genannten Gruppen substituiert sein können,
R⁸, R⁹, R¹⁰ unabhängig voneinander, gleich oder verschieden, H, C₁-C₂₀-Alkyl, C₂-C₂₀-Alkenyl, C₂-C₂₀-Alkinyl, C₃-C₁₅-Cycloalkyl, Aryl.

Weiterhin Gegenstand der vorliegenden Erfindung ist somit auch ein Verfahren, bei dem der mindestens eine Initiator ausgewählt ist aus der Gruppe bestehend aus organischen Bromiden und das Gemisch (G) als organische Komponente (A) das bei der radikalischen Polymerisation erhaltene Polymer enthält, das mindestens eine Brom-Kohlenstoffbindung aufweist.

Geeignete Verfahren zur radikalischen Polymerisation der vorstehend beschriebenen Monomere sind beispielsweise in der WO 2013/030 261 beschrieben, auf die hiermit Bezug genommen wird.

Im Hinblick auf die vorstehend genannte generische Formel (1) der geeigneten Monomere bezeichnen die Ausdrücke der Form Cₐ-C_{b} im Rahmen dieser Erfindung chemische Verbindungen oder Substituenten mit einer bestimmten Anzahl von Kohlenstoffatomen. Die Anzahl an Kohlenstoffatomen kann aus dem gesamten Bereich von a bis b, einschließlich a und b gewählt werden, a ist mindestens 1 und b immer größer als a. Eine weitere Spezifizierung der chemischen Verbindungen oder der Substituenten erfolgt durch Ausdrücke der Form Cₐ-C_{b}-V. V steht hierbei für eine chemische Verbindungsklasse oder Substituentenklasse, beispielsweise für Alkylverbindungen oder Alkylsubstituenten.

Halogen steht für Fluor, Chlor, Brom, oder Iod, vorzugsweise für Chlor, Brom oder Iod besonders bevorzugt für Chlor oder Brom.

Im Einzelnen haben die für die verschiedenen Substituenten angegebenen Sammelbegriffe folgende Bedeutung:
C₁-C₂₀-Alkyl: geradkettige oder verzweigte Kohlenwasserstoffreste mit bis zu 20 Kohlenstoffatomen, beispielsweise C₁-C₁₀-Alkyl oder C₁₁-C₂₀-Alkyl, bevorzugt C₁-C₁₀-Alkyl beispielsweise C₁-C₃-Alkyl, wie Methyl, Ethyl, Propyl, Isopropyl, oder C₄-C₆-Alkyl, n-Butyl, sec-Butyl, tert.-Butyl, 1,1-Dimethylethyl, Pentyl, 2-Methylbutyl, 1,1-Dimethylpropyl, 1,2-Dimethylpropyl, 2,2-Dimethylpropyl, 1-Ethylpropyl, Hexyl, 2-Methylpentyl, 3-Methyl-pentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 2-Ethylbutyl, 1,1,2-Trimethylpropyl, 1,2,2-Trimethylpropyl, 1-Ethyl-1-methylpropyl, 1-Ethyl-2-methylpropyl, oder C₇-C₁₀-Alkyl, wie Heptyl, Octyl, 2-Ethyl-hexyl, 2,4,4-Trimethylpentyl, 1,1,3,3-Tetramethylbutyl, Nonyl oder Decyl sowie deren Isomere.

C₁-C₂₀-Alkoxy bedeutet eine geradkettige oder verzweigte Alkylgruppe mit 1 bis 20 Kohlenstoffatomen (wie vorstehend genannt), welche über ein Sauerstoffatom (-O-) angebunden sind, beispielsweise C₁-C₁₀-Alkoxy oder C₁₁-C₂₀-Alkoxy, bevorzugt C₁-C₁₀-Alkyloxy, insbesondere bevorzugt C₁-C₃-Alkoxy, wie beispielweise Methoxy, Ethoxy, Propoxy.

C₂-C₂₀-Alkenyl: ungesättigte, geradkettige oder verzweigte Kohlenwasserstoffreste mit 2 bis 20 Kohlenstoffatomen und einer Doppelbindung in einer beliebigen Position, beispielsweise C₂-C₁₀-Alkenyl oder C₁₁-C₂₀-Alkenyl, bevorzugt C₂-C₁₀-Alkenyl wie C₂-C₄-Alkenyl, wie Ethenyl, 1-Propenyl, 2-Propenyl, 1-Methylethenyl, 1-Bute-nyl, 2-Butenyl, 3-Butenyl, 1-Methyl-1-propenyl, 2-Methyl-1-propenyl, 1-Methyl-2-pro-penyl, 2-Methyl-2-propenyl, oder C5-C6-Alkenyl, wie 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl oder 1-Ethyl-2-methyl-2-propenyl, sowie C₇-C₁₀-Alkenyl, wie die Isomere von Heptenyl, Octenyl, Nonenyl oder Decenyl.

C₂-C₂₀-Alkinyl: geradkettige oder verzweigte Kohlenwasserstoffgruppen mit 2 bis 20 Kohlenstoffatomen und einer Dreifachbindung in einer beliebigen Position, beispielsweise C₂-C₁₀-Alkinyl oder C₁₁-C₂₀-Alkinyl, bevorzugt C₂-C₁₀-Alkinyl wie C₂-C₄-Alkinyl, wie Ethinyl, 1-Propinyl, 2-Propinyl, 1-Butinyl, 2-Butinyl, 3-Butinyl, 1-Methyl-2-propinyl, oder C5-C7-Alkinyl, wie 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl oder 1-Ethyl-1-methyl-2-propinyl sowie C₇-C₁₀-Alkinyl, wie die Isomere von Heptinyl, Octinyl, Noninyl, Decinyl.

C₃-C₁₅-Cycloalkyl: monocyclische, gesättigte Kohlenwasserstoffgruppen mit 3 bis zu 15 Kohlenstoffringgliedern, bevorzugt C₃-C₈-Cycloalkyl wie Cyclopropyl, Cyclobutyl, Cyclopentyl, Cyclohexyl, Cycloheptyl oder Cyclooctyl sowie ein gesättigtes oder ungesättigtes cyclisches System wie z. B. Norbornyl oder Norbenyl.

Aryl: ein ein- bis dreikerniges aromatisches Ringsystem enthaltend 6 bis 14 Kohlenstoffringglieder, z. B. Phenyl, Naphthyl oder Anthracenyl, bevorzugt ein ein- bis zweikerniges, besonders bevorzugt ein einkerniges aromatisches Ringsystem.

Aryloxy: ist ein ein- bis dreikerniges aromatisches Ringsystem (wie vorstehend genannt), welches über ein Sauerstoffatom (-O-) angebunden ist, bevorzugt ein ein- bis zweikerniges, besonders bevorzugt ein einkerniges aromatisches Ringsystem.

Hetaryl: Heterocyclische Substituenten, die sich formal von Aryl-Gruppen ableiten indem eine oder mehrere Methin- (-C=) und/oder Vinylengruppe (-CH=CH-) durch Tri- oder divalente Heteroatome ersetzt werden. Bevorzugt sind als Heteroatome Sauerstoff, Stickstoff und/oder Schwefel. Besonders bevorzugt Stickstoff und/oder Sauerstoff.

Heterocyclen: fünf- bis zwölfgliedrige, bevorzugt fünf- bis neungliedrige, besonders bevorzugt fünf- bis sechsgliedrige, Sauerstoff-, Stickstoff- und/oder Schwefelatome, gegebenenfalls mehrere Ringe aufweisende Ringsysteme wie Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl. Die Heterocyclen können in beliebiger Weise chemisch angebunden sein, beispielsweise über eine Bindung zu einem Kohlenstoffatom des Heterocyclus oder eine Bindung zu einem der Heteroatome. Weiterhin, insbesondere, fünf- oder sechsgliedrige gesättigte stickstoffhaltige Ringsysteme, die über ein Ringstickstoffatom angebunden sind und die noch ein oder zwei weitere Stickstoffatome oder ein weiteres Sauerstoff- oder Schwefelatom enthalten können.

Heteroatome sind Phosphor, Sauerstoff, Stickstoff oder Schwefel, bevorzugt Sauerstoff, Stickstoff oder Schwefel, deren freie Valenzen gegebenenfalls durch H oder C₁-C₂₀-Alkyl abgesättigt sind.

Als Monomere der allgemeinen Formel (I) werden im erfindungsgemäßen Verfahren bevorzugt Alkyl(meth)acrylate, substituierte (Meth)acrylate, N-substiutierte (Meth)acrylamide oder N,N-disubstituierte (Meth)acrylamide eingesetzt.

Das bei der Polymerisation erhaltene Gemisch (G) enthält in einer bevorzugten Ausführungsform eine Übergangsmetallkomponente (B), die ein Übergangsmetall in den Oxidationsstufen (+I) und (+II) enthält. Das Gemisch (G) kann darüber hinaus ein Übergangsmetall in der Oxidationsstufe (0), das heißt in elementarer Form enthalten.

Bevorzugt enthält das Gemisch (G) als Übergangsmetallkomponente (B) Kupfer in der Oxidationsstufe Cu (+II) sowie Kupfer in der Oxidationsstufe (0).

Das Gemisch (G) wird mit einer Mischung (M) in Kontakt gebracht, die eine Polyacrylsäurekomponente (C) und Zink enthält. Die Mischung (M) enthält Zink bevorzugt in elementarer Form, d.h. in der Oxidationsstufe 0 (Zn (0)). Durch das Zink wird die Übergangsmetallkomponente (B), die Übergangsmetalle in den Oxidationsstufen (+I) und (+II) enthält, zu Übergangsmetallen der Oxidationsstufe (0) oxidiert. Für den Fall des als Übergangsmetallkomponente (B) bevorzugt eingesetzten Kupfers, das nach der Polymerisation besonders bevorzugt in der Oxidationsstufe (Cu (+II)) vorliegt, wird das Kupfer (+II) zu Kupfer (0) reduziert. Anders ausgedrückt bedeutet dies, dass Kupfer (+II) Ionen durch Zink zu elementarem Kupfer reduziert werden.

Die Halogen-Kohlenstoffbindung, bevorzugt die Chlor-Kohlenstoffbindung beziehungsweise Brom-Kohlenstoffbindung, besonders bevorzugt die Brom-Kohlenstoffbindung, der organischen Komponente (A) wird durch das Zink abgespalten und durch Wasserstoff ersetzt. Diese Reaktion wird auch als *Wurtz*-Reaktion bezeichnet.

Durch das Inkontaktbringen des Gemischs (G) mit der Mischung (M) wird hierdurch simultan eine Abspaltung der Halogenendgruppen und eine Reduktion von Übergangsmetallionen, bevorzugt Kupfer (+II), zu elementaren Übergangsmetallen, bevorzugt Kupfer (0), erreicht.

Bevorzugt handelt es sich bei den als Komponente (A) bevorzugten Polymeren um Homopolymere, statistische Copolymere, Blockcopolymere, Gradientcopolymere, Pfropfcopolymere, Sterncopolymere oder Telechele Polymere. Besonders bevorzugt sind Acrylat-Methacrylat-Diblockcopolymere sowie Acrylat-Methacrylat-Multiblockcopolymere, besonders bevorzugt Acrylat-Methacrylat-Triblockcopolymere und Blockcopolymer aus Acrylaten und Methacrylaten, bevorzugt pBA-b-pMMA oder Triblockcopolymere aus pMMA-b-pBA-b-pMMA sowie säurehaltige Polymere, insbesondere Polyacrylsäure.

Als organische Komponente (A) am meisten bevorzugt sind Polyalkylmethacrylat-Polymere und Polyalkylacrylat-Polymere, die mindestens eine Brom-kohlenstoffbindung (Bromendgruppe) aufweisen.

Als organische Komponente (A) am meisten bevorzugt sind Polymethylmethacrylat-Polymere (PMMA) und Polymethylacrylat-Polymere (PMA), die mindestens eine Brom-kohlenstoffbindung (Bromendgruppe) aufweisen.

In einer bevorzugten Ausführungsform werden bei der Polymerisation zur Herstellung des Gemischs (G) ein oder mehrere Lösungsmittel eingesetzt, beispielsweise Alkohole oder Polyole, bevorzugt Dimethylsulfoxid, Methylethylketon, Ethylacetat, Methanol, Ethanol, Propanol, iso-Butanol, n-Butanol, tert-Butanol, Glycol, Glycerin, Ethylencarbonat, Propylencarbonat, Aceton, Lactate, Wasser und Mischungen aus diesen Lösungsmitteln, bevorzugt beträgt der Wassergehalt im Lösungsmittel von 0 bis 10 Gew.-%, besonders bevorzugt von 0 bis 7 Gew.-%, insbesondere von 0 bis 5 Gew.-%, jeweils bezogen auf die Gesamtmenge an Lösungsmittel. Insbesondere lasse sich als Lösungsmittel bevorzugt auch Mischungen von protischen und aprotischen Lösungsmitteln einsetzen.

Die Mischung (M) enthält eine Polyacrylsäurekomponente (C) und Zink in der Oxidationsstufe (0).

Die Polyacrylsäurekomponente (C) ist von der organischen Komponente (A) verschieden. Als Polyacrylsäurekomponente (C) sind wasserabsorbierende Polymere, die auch als Superabsorber bezeichnet werden, bevorzugt. Die Herstellung geeigneter Polyacrylsäurekomponenten (C) ist beispielsweise in "Modern Superabsorbent Polymer Technology" , F.L. Buchholz und A.T. Graham, Wiley-VCH, 1998, Seiten 71 bis 103 beschreiben. Geeignete Polyacrylkomponenten (C) sind beispielsweise unter dem Handelsnamen Luquasorb ® der BASF SE erhältlich, wobei Luquasorb R 1280 RS besonders geeignet ist.

Geeignete Polyacrylsäurekomponenten (C) können hergestellt werden durch Polymerisation einer Monomerlösung oder Monomersuspension enthaltend:
i) mindestens ein ethylenisch ungesättigtes, säuregruppentragendes Monomer, das zumindest teilweise neutralisiert sein kann,
ii) mindestens eines Vernetzers,
iii) mindestens eines Initiators,
iv) optional ein oder mehrerer mit den unter i) genannten Monomeren copolymerisierbare ethylenisch ungesättigte Monomere und
v) optional ein oder mehrere wasserlösliche Polymere.

Geeignete Verfahren zur Herstellung der Polyacrylsäurekomponente (C) sind beispielsweise in der WO 2011/162544, US 2011224361 und WO 10/108875 beschrieben, auf die hiermit Bezug genommen wird.

Gegenstand der vorliegenden Erfindung ist somit auch ein Verfahren, bei dem die Polyacrylsäurekomponente (C) erhältlich ist durch Polymerisation einer Monomerlösung oder Monomersuspension enthaltend:
i) mindestens ein ethylenisch ungesättigtes, säuregruppentragendes Monomer, das zumindest teilweise neutralisiert sein kann,
ii) mindestens eines Vernetzers,
iii) mindestens eines Initiators,
iv) optional ein oder mehrerer mit den unter i) genannten Monomeren copolymerisierbare ethylenisch ungesättigte Monomere und
v) optional ein oder mehrere wasserlösliche Polymere.

Geeignete Monomere i) sind beispielsweise ethylenisch ungesättigte Carbonsäuren, wie Acrylsäure, Methacrylsäure und Itaconsäure. Besonders bevorzugte Monomere i) sind Acrylsäure und Methacrylsäure. Ganz besonders bevorzugt ist Acrylsäure.

Weitere geeignete Monomere i) sind beispielsweise ethylenisch ungesättigte Sulfonsäuren, wie Styrolsulfonsäure und 2-Acrylamido-2-methylpropansulfonsäure (AMPS).

Der Anteil an Acrylsäure und/oder deren Salzen an der Gesamtmenge der Monomere i) beträgt vorzugsweise mindestens 50 Mol-%, besonders bevorzugt mindestens 90 Mol-%, ganz besonders bevorzugt mindestens 95 Mol-%.

Die Säuregruppen der erhaltenen Polyacrylsäurekomponente (C) sind üblicherweise teileweise neutralisiert. Die Neutralisation wird vorzugsweise auf der Stufe der Monomere (i) durchgeführt. Dies geschieht üblicherweise durch Einmischen des Neutralisationsmittels als wässrige Lösung oder bevorzugt auch als Feststoff. Der Neutralisationsgrad beträgt vorzugsweise 25 bis 95 Mol-%, besonders bevorzugt 30 bis 80 Mol-%, ganz besonders bevorzugt 40 bis 75 Mol-%. Als Neutralisationsmittel können vorzugsweise Alkalimetallhydroxide, Alkalimetalloxide, Alkalimetallcarbonate oder Alkalimetallhydrogencarbonate sowie Mischungen daraus eingesetzt werden. Statt Alkalimetallsalzen können auch Ammoniumsalze verwendet werden. Natrium und Kalium sind als Alkalimetalle besonders bevorzugt. Ganz besonders bevorzugt sind jedoch Natriumhydroxid, Natriumcarbonat oder Natriumhydrogencarbonat sowie deren Mischungen.

In einer weiteren Ausführungsform wird eine Polyacrylsäurekomponente (C) deren Säuregruppen im Wesentlichen nicht neutralisiert sind eingesetzt. Unter "im Wesentlichen nicht neutralisiert" wird erfindungsgemäß verstanden, dass der Neutralisationsgrad 0 bis < 25 Mol.-% beträgt. Hierzu können als Monomere (i) die freien Säuren eingesetzt werden. Alternativ ist es möglich, eine teilneutralisierte Polyacrylsäurekomponente (C) nachträglich mit einer Säure, beispielsweise Salzsäure (HCl), zu behandeln.

Als Vernetzer (ii) sind Verbindungen mit mindestens zwei zur Vernetzung geeigneten Gruppen geeignet. Derartige Gruppen sind beispielsweise ethylenisch ungesättigte Gruppen, die in die Polymerkette radikalisch einpolymerisiert werden können, und funktionelle Gruppen, die mit den Säuregruppen des Monomers (i) kovalente Bindungen eingehen können. Weiterhin sind auch polyvalente Metallsalze, die mit mindestens zwei Säuregruppen des Monomeren (i) koordinative Bindungen ausbilden können.

Bevorzugte Vernetzer (ii) sind solche, die in das Polymernetzwerk der Polyacrylsäurekomponente (C) radikalisch einpolymerisiert werden können. Bevorzugte Vernetzer (ii) sind ausgewählt aus der Gruppe bestehend aus Ethylenglycoldimethacrylat, Diethylenglycoldiacrylat, Polyethylenglycoldiacrylat, Allylmethacrylat, Trimethylolpropantriacrylat, Triallylamin, Tetraallylammoniumchlorid und Tetraallyloxyethan. Besonders bevorzugte Vernetzer (ii) sind Pentaerythrittriallylether, Tetraallyloxyethan, Methylen-bis-methacrylamid, 15-fach ethoxidiertes Trimethylolpropantriacrylat, Polyethylenglycoldiacrylat, Trimethylolpropantriacrylat und Triallylamin. Weiterhin als Vernetzer geeignet sind beispielsweise die ebenfalls besonders bevorzugten Triacrylate des 3- bis 5-fach ethoxylierten und/oder propoxylierten Glycerins, insbesondere das Triacrylat des 3-fach ethoxylierten Glycerins.

Als Initiator (iii) können sämtliche unter Polymerisationsbedingungen Radikale erzeugende Verbindungen eingesetzt werden. Geeignete Initiatoren sind beispielsweise Natriumperoxodisulfat/Ascorbinsäure, Wasserstoffperoxid/Ascorbinsäure, Natriumperoxodisulfat/Natriumbisulfit und Wasserstoffperoxid/Natriumbisulfit.

Als optional enthaltene Komponente (iv) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat und Diethylaminoethylmethacrylat geeignet.

Als optional enthaltene Komponente (v) können beispielsweise Polyvinylalkohol, Polyvinylpyrrolidon, Stärke, Stärkederivate, modifizierte Cellulose, wie Methylcellulose oder Hydroxyethylcellulose, Gelatine, Polyglycol oder Polyacrylsäuren, vorzugsweise Stärke, Stärkederivate und modifizierte Cellulose eingesetzt werden.

Die als Polyarylsäurekomponente (C) eingesetzten Polymere weisen im Allgemeinen eine Zentrifugenretentionskapazität (centrifuge retention capacity; CRC) im Bereich von 20 bis 50, bevorzugt im Bereich 25 bis 40 und besonders bevorzugt im Bereich von 27 bis 35 auf.

Die centrifuge retention capacity (CRC) wird erfindungsgemäß durch die von der EDANA empfohlenen Testmethode Nr. WSP 241.2-05 bestimmt.

Das Inkontaktbringen des Gemischs (G) mit der Mischung (M) kann diskontinuierlich oder kontinuierlich erfolgen. Bevorzugt erfolgt das Inkontaktbringen kontinuierlich.

In dieser Ausführungsform wird die Mischung (M) als stationäre Phase eingesetzt. Die Mischung (M) kann hierzu beispielsweise in Form einer Säule, die mit der Mischung (M) gefüllt ist, eingesetzt werden. Zum Inkontaktbringen wird nachfolgend das Gemisch (G) auf die stationäre Phase der Säule aufgetragen.

Gegenstand der vorliegenden Erfindung ist somit auch ein Verfahren, bei die Mischung (M) in Form einer stationären Phase eingesetzt wird, auf die das Gemisch (G) zum Inkontaktbringen aufgetragen wird.

Das Gemisch (G), bevorzugt das durch Polymerisation erhaltene Gemisch (G) kann hierzu direkt auf die als stationäre Phase eingesetzte Mischung (M) aufgetragen werden. Darüber hinaus ist es möglich, das bevorzugt durch Polymerisation erhaltene Gemisch (G) vor dem Auftragen weiteren Aufarbeitungsschritten zu unterziehen. Beispielsweise kann aus dem bevorzugt durch Polymerisation erhaltene Gemisch (G) das Lösungsmittel abgetrennt werden.

Nachfolgend wird das Gemisch (G) durch ein Elutionsmittel, das als mobile Phase eingesetzt wird, durch die als stationäre Phase eingesetzte Mischung (M) eluiert. Nach Verlassen der als stationäre Phase eingesetzten Mischung (M) wird ein Eluat enthalten, das eine organische Komponente (A1) enthält, die im Wesentlichen keine Halogen-Kohlenstoffbindungen mehr aufweist und darüber hinaus im Wesentlichen frei von Übergangsmetallkomponenten (B) ist.

Gegenstand der vorliegenden Erfindung ist somit auch ein Verfahren, bei dem das Gemisch (G) durch ein Elutionsmittel durch die stationäre Phase eluiert wird.

Gegenstand der vorliegenden Erfindung ist somit auch ein Verfahren, bei dem nach dem Eluieren ein Eluat erhalten wird, das eine organische Komponente (A1) enthält, die im Wesentlichen keine Halogen-Kohlenstoffverbindungen aufweist und im Wesentlichen frei von der Übergangsmetallkomponente (B) ist.

Unter "im Wesentlichen frei" wird vorliegend verstanden, dass in der organischen Komponente (A1) durch die in den Beispielen beschrieben NMR-Detektionsmethoden keine Signale mehr nachweisbar sind, die einem Proton zugeordnet werden können, das geminal an ein Kohlenstoffatom gebunden ist, welches eine Halogen-Kohlenstoffbindung aufweist. Anders ausgedrückt bedeutet dies, dass mittels NMR-Spektroskopie keine CHX-Signale mehr nachgewiesen werden können, wobei X für einen Halogensubstituenten steht.

Im Wesentlichen frei im Bezug auf die Übergangsmetallkomponente bedeutet, dass durch die in den Beispielen beschriebene Messmethode der Emissionsspektroskopie mit induktiv gekoppeltem Plasma (ICP-OES) keine Übergangsmetallionen mehr nachgewiesen werden können. Insbesondere bevorzugt ist der Gehalt an Kupfer < 10 ppm, wobei Kupfer hierfür die Summe von Kupfer (+I), Kupfer (+II) und Kupfer (0) bedeutet.

Als Elutionsmittel wird bevorzugt ein Elutionsmittel eingesetzt, das Wasser und ein organisches Lösungsmittel enthält. Bevorzugt beträgt der Wasseranteil im Elutionsmittel maximal 50 Gew.-%, bevorzugt maximal 30 Gew.-% und besonders bevorzugt maximal 25 Gew.-%, jeweils bezogen auf das Gesamtgewicht des Elutionsmittels.

Gegenstand der vorliegenden Erfindung ist somit auch ein Verfahren, bei dem das Elutionsmittel 15 bis 25 Gew.-% Wasser und 75 bis 85 Gew.-% eines organischen Lösungsmittels enthält.

Das Elutionsmittel enthält mindestens 1 Gew.-% Wasser, bevorzugt mindestens 5 Gew.-% und besonders bevorzugt mindestens 10 Gew.-% Wasser, jeweils bezogen auf das Gesamtgewicht des Elutionsmittels. In einer besonders bevorzugten Ausführungsform enthält das Elutionsmittel 10 bis 30 Gew.-%, bevorzugt 15 bis 25 Gew.-% Wasser, jeweils bezogen auf das Gesamtgewicht des Elutionsmittels.

Als organische Lösungsmittel sind aprotische organische Lösungsmittel bevorzugt. Besonders bevorzugt enthält das Elutionsmittel 15 bis 25 Gew.-% Wasser und 75 bis 85 Gew.-% Aceton oder wahlweise auch Methylethylketon.

Zur Herstellung der Mischung (M) wird das Zink in partikulärer Form in der Polyacrylsäurekomponente (C) verteilt. Hierzu wird bevorzugt Zinkpulver eingesetzt. Zur Herstellung der Mischung (M) können die Polyacrylsäurekomponente (C) und das Zink, bevorzugt das Zinkpulver, als Feststoffe gemischt werden. Dies kann beispielsweise durch gemeinsames Mahlen erfolgen. In einer bevorzugten Ausführungsform beträgt das Verhältnis der Gewichtsteile der Polyacrylsäurekomponente (C) zu Zink 1 : 1 bis 10 : 1, bevorzugt 2 : 1 bis 5 : 1.

Gegenstand der vorliegenden Erfindung ist somit auch ein Verfahren, bei dem die Mischung (M) die Polyacrylsäurekomponente (C) und Zink in Gewichtsverhältnissen im Bereich von 1 : 1 bis 10 : 1 enthält.

In einer weiteren bevorzugten Ausführungsform enthält die Mischung (M) zusätzlich ein Lösungsmittel, das Wasser enthält. Besonders bevorzugt enthält die Mischung (M) als Lösungsmittel das vorstehend beschriebene Elutionsmittel. Durch das im Elutionsmittel enthaltene Wasser quillt die Polyacrylsäurekomponente (C) auf. Für den Fall, dass die Mischung (M) als stationäre Phase eingesetzt wird, können die Polyacrylsäurekomponente (C), das Zinkpulver und das Elutionsmittel gemischt werden und anschließend als stationäre Phasen in eine Säule überführt werden. Darüber hinaus ist es möglich, die Polyacrylsäurekomponente und das Zink in eine Säule, unter Ausbildung der stationären Phase, einzufüllen und nachfolgend mit dem Elutionsmittel in Kontakt zu bringen.

Zum Inkontaktbringen des Gemischs (G) mit der Mischung (M) in Form einer stationären Phase können eine Säule oder zwei oder mehrere Säulen eingesetzt werden. Für den Fall, dass zwei oder mehrere Säulen eingesetzt werden, können diese seriell oder parallel angeordnet sein. Bevorzugt ist die parallele Anordnung der Säulen.

Beim Inkontaktbringen des Gemischs (G) mit der Mischung (M) in Form einer stationären Phase unter Einsatz eines Elutionsmittels wird das Gemisch (G) durch das Elutionsmittel über die stationäre Phase eluiert. Beim Durchlaufen der stationären Phase spaltet das in der Mischung (M) enthaltene elementare Zink Halogene aus den Halogen-Kohlenstoffbindungen ab und ersetzt diese durch Wasserstoff. Die Carbonsäuregruppen der Polyacrylsäurekomponente (C) fungiert hierbei als Säuregruppe. Auf den Einsatz von bei Raumtemperatur flüssigen Säuren kann daher verzichtet werden. Das nach Durchlauf durch die Säule erhaltene Eluat ist somit im Wesentlichen frei von Halogen-Kohlenstoffbindungen sowie im Wesentlichen frei von Übergangsmetallkomponenten (B).

Das erfindungsgemäße Verfahren ermöglicht so die effiziente, kostengünstige und kontinuierliche Aufarbeitung eines Gemischs (G), das eine organische Komponente (A), die mindestens eine Halogen-Kohlenstoffbindung aufweist, und eine Übergangsmetallkomponente (B) enthält.

Die vorliegende Erfindung wird durch die nachfolgenden Beispiele näher erläutert, ohne sie jedoch hierauf zu beschränken.

### 1. Bereitstellung eines Gemischs (G) durch Polymerisation von Methylacrylat (MA)

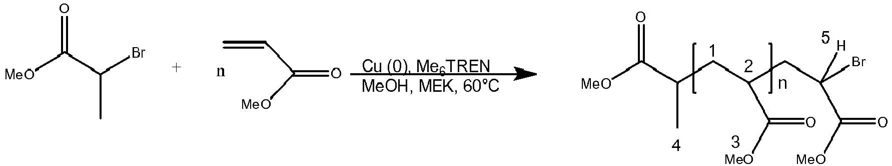

Ein 500 ml-Mehrhalskolben wird mit Rückflusskühler, Thermometer und einem mechanischen Rührer versehen, dessen Teflonblatt mit 50 cm Kupferdraht mit einem Durchmesser von 1 mm umwickelt ist. Der Mehrhalskolben wird mit Stickstoff inertisiert. Nachfolgend werden 96 g (100 ml, 1,1 mol, 56 eq) Methylacrylat (MA), 70 ml Methylethylketon (MEK), 30 ml Methanol (MOH), 459 mg (0,532 ml, 2 mmol, 0,1 eq) Tris(2-Dimethylamino)ethylamin (TREN) und 3,33 g (2,22 ml, 19,91 mmol, 1 eq) Methyl-2-brompropionat (MBP) vorgelegt und die Reaktionsmischung auf 60 °C aufgeheizt.

Nach 65 Minuten Reaktionszeit wird die Reaktion durch Abkühlen beendet. Ein Teil der Reaktionslösung wird aus dem Kolben entnommen und zur Analytik im Vakuum getrocknet. Die Reaktionslösung (das Gemisch (G)) enthält als organische Komponente (A) das vorstehend gezeigte Polymethylacrylat, das eine Brom-Kohlenstoffbindung aufweist. Das Wasserstoffatom, das geminal an das Kohlenstoffatom gebunden ist, das die Brom- Kohlenstoffbindung aufweist, ist durch die Ziffer 5 gekennzeichnet.

Der Umsatz der Reaktion beträgt > 90 % und wurde über Feststoffgehaltbestimmung ermittelt. Das Protonenresonanzspektrum zeigt hierbei die folgenden Signale.

| | |
|---|---|
| ¹H-NMR (CDCl₃): | δ (ppm) = 1,14(H⁴); 1,41 bis 2,01 (2 H, H¹); 2,25 bis 2,51 (1 H, H²); 3,66 (3 H, H³); 4,25 (H⁵) |

Die bei der Polymerisation erhaltene Reaktionslösung entspricht dem Gemisch (G) und wird auch als "PMA-roh" oder Rohpolymerlösung bezeichnet.

Um etwaige Abbaureaktionen bei der Entkupferung und der Abspaltung der Halogenendgruppen auszuschließen, wurde das als organische Komponente (A) erhaltene Polymer mittels Gelpermeationschromatographie (GPC) analysiert. Die Messung erfolgt mit zwei in Reihe geschalteten 10 µm Plgel Säulen und einem DRI Detektor von Agilent. Als Eluent wird THF mit 0,1 % Trifluoressigsäure bei 35 °C verwendet, wobei die Kalibrierung der Molmassen mittels Standards der Fa. Polymer Laboratories erfolgt.

Die Bestimmung des Kupfergehalts erfolgt durch optische Emmisionspektroskopie mit induktiv gekoppeltem Plasma (ICP-OES). Für die Bestimmung des Kupfergehalts der Polymerproben, wurden diese zunächst getrocknet und anschließend in einer Mischung aus konzentrierter Schwefelsäure und Salpetersäure bei 320° C aufgeschlossen. Es erfolgte eine Nachbehandlung des Rückstandes mit einer Mischung aus Salpeter-, Schwefel- und Perchlorsäure bei 160° C. Die Säuren wurden abgeraucht und der Rückstand in verdünnter Salzsäure aufgenommen. Die Kupferbestimmungen erfolgten dann mit einem Varian Vista 725 ICP-OES-Spektrometer über einen Zeitraum von 30 s pro Probe bei einer Detektionswellenlänge von 324,75 nm.

Das als organische Komponente (A) im Gemisch (G) enthaltene Polymer weist die nachfolgenden in Tabelle 1 gezeigten Molmassen auf. Der Kupfergehalt des Gemisch (G) beträgt 600 ppm.

**Tabelle 1**

| **Probe** | **Mₙ** | **M_{w}** | **MWD** | **Kupfergehalt** |
|---|---|---|---|---|
| | (g/mol) | (g/mol) | M_{w}/Mₙ | (ppm) |
| PMA-roh | 4380 | 5380 | 1,2 | 600 |

### 2. Vergleichsbeispiel; diskontinuierliche Aufarbeitung

In einen 100 ml Kolben werden 0,5 g Zinkpulver, 0,5 g Kieselgel, 5 ml Essigsäure und 20 ml des unter Ziffer 1 beschriebenen Gemischs (G) (PMA-roh) gegeben und für eine Stunde bei 20°C gerührt. Die Reaktionsmischung wird nachfolgend abfiltriert und analysiert. Die diskontinuierliche Aufarbeitung entspricht hierbei dem von Canturk et al. beschriebenen Verfahren und wird hier als PMA-H bezeichnet. Die Ergebnisse sind in der Tabelle 2 zusammengefasst.

### 3. Beispiel (erfindungsgemäß); kontinuierliche Aufarbeitung

Zur Herstellung der Mischung (M) werden 13,4 g der Polyacrylsäurekomponente (C) mit 4,5 g Zinkpulver gemischt und gemörsert. Als Polyacrylsäurekomponente (C) wird ein quervernetztes teilneutralisiertes Polyacrylsäurepolymer eingesetzt. Dieses ist unter dem Handelsnamen Luquasorb ® R 1280 RS der BASF SE erhältlich. Die Mischung aus Luquasorb und Zinkpulver wird zur Ausbildung einer stationären Phase in eine Glassäule mit Fritte gegeben. Und nachfolgend mit Wasser und Aceton (Volumenanteile 1:4) aufgequollen. Hierdurch wird die Mischung (M) in Form einer stationären Phase erhalten. Nachfolgend werden 5 ml des unter Ziffer 1 erhaltenen Gemischs (G), d.h. der Rohpolymerlösung (PMA-roh) aufgegeben.

Anschließend wird ein Elutionsmittel mit einer Flussrate (50 ml/h bzw. 29 ml/h) durch die stationäre Phase (Mischung M) geleitet. Das Elutionmittel enthält Wasser und Aceton (Volumenanteile 1:4). Das erhaltene Eluat wird nachfolgend im Vakuum bei 40°C getrocknet und analysiert. Die Probe mit einer Flussrate von 50 ml/h (Beispiel 3a) wird als "PMA-50" bezeichnet. Die Probe mit einer Flussrate von 29 ml/h (Beispiel 3b) wird als "PMA-29" bezeichnet. Die Ergebnisse sind in der nachfolgenden Tabelle 2 angegeben.

### 4. Vergleichsbeispiel; kontinuierliche Aufarbeitung

Die Durchführung erfolgt analog zu Beispiel 3, wobei Kieselgel und Zinkpulver als stationäre Phase eingesetzt werden. Hierzu werden 13,4 g Kieselgel mit 4,5 g Zinkpulver gemischt und gemörsert. Anschließend wird die Mischung aus Kielsegel und Zinkpulver in dem in Beispiel 3 beschriebenen Elutionsmittel aufgeschlämmt und in eine Säule mit Fritte überführt. Anschließend wird wie in Beispiel 3 beschrieben verfahren. Die Flussrate beträgt 29 ml/h. Die so erhaltene Probe wird als "PMA-Si-29" bezeichnet. Die Ergebnisse sind in der nachfolgenden Tabelle 2 angegeben.

**Tabelle 2**

| **Probe** | **Mₙ** | **M_{w}** | **MWD** | **Kupfergehalt** | **Integral** |
|---|---|---|---|---|---|
| | (g/mol) | (g/mol) | M_{w}/Mₙ | (ppm) | H⁵ |
| PMA-roh | 4380 | 5380 | 1,2 | 600 | 100 |
| PMA-H | 4520 | 5420 | 1,2 | < 10 | 1 |
| PMA-50 (Beispiel 3a) | 4660 | 5680 | 1,2 | <10 | 40 |
| PMA-29 (Beispiel 3b) | 4640 | 5650 | 1,2 | <10 | 1 |
| PMA-Si-29 (Beispiel 4) | 4550 | 5460 | 1,2 | <10 | 80 |

Der Vergleich der vorstehenden Beispiele zeigt, das mit dem erfindungsgemäßen Verfahren simultan aus einem Gemisch (G) Übergangsmetallkomponenten (B) abgetrennt und Halogenendgruppen aus organischen Komponenten (A) abgespalten werden können. Das Molekulargewicht der organischen Komponente bleibt hierbei weitgehend unverändert. Mit dem erfindungsgemäßen Verfahren werden die Halogenendgruppen im Wesentlichen vollständig abgespalten, wohingegen beim kontinuierlichen Einsatz von Silicagel noch signifikante Mengen an Halogenendgruppen detektierbar sind.

## Patentansprüche

1. Verfahren zur Aufarbeitung eines Gemischs (G), das eine organische Komponente (A), die mindestens eine Halogen-Kohlenstoffbindung aufweist, und eine Übergangsmetallkomponente (B) enthält, durch Inkontaktbringen des Gemischs (G) mit einer Mischung (M), die eine Polyacrylsäurekomponente (C) und Zink enthält.

2. Verfahren gemäß Anspruch 1, **dadurch gekennzeichnet, dass** die Übergangsmetallkomponente (B) mindestens ein Übergangsmetall in der Oxidationsstufe (+I) und/oder (+II) enthält, deren Redoxpaare [Übergangsmetall (+II)/Übergangsmetall (0)] bzw.
[Übergangsmetall (+I)/Übergangsmetall (0)]
Redoxpotentiale aufweisen, die positiver als das Redoxpotential des Redoxpaars von Zink [Zink (+II)/ Zn (0)] sind.

3. Verfahren gemäß Anspruch 1 oder 2, **dadurch gekennzeichnet, dass** das Gemisch (G) ein Reaktionsgemisch ist, das durch eine radikalische Polymerisation hergestellt wird, wobei die radikalische Polymerisation mindestens eines radikalisch polymerisierbaren Monomers in Gegenwart
a) mindestens eines Katalysators enthaltend die Übergangsmetallkomponente (B),
b) mindestens eines Initiators ausgewählt aus der Gruppe organischer Halogenide,
c) mindestens eines Liganden und
d) optional eines Lösungsmittels
erfolgt, und
das Gemisch (G) als organische Komponente (A), das bei der radikalischen Polymerisation erhaltene Polymer, das mindestens eine Halogen-Kohlenstoffbindung aufweist, gegebenenfalls den mindestens einen Initiator und die Übergangsmetallkomponente (B) enthält.

4. Verfahren gemäß Anspruch 3, **dadurch gekennzeichnet, dass** das mindestens eine radikalisch polymerisierbare Monomer mindestens ein Monomer der allgemeinen Formel (I). 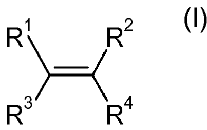 ist,
mit
R¹ H, C₁-C₄-Alkyl,
R² H, C₁-C₄-Alkyl,
R³ H, C₁-C₄-Alkyl,
R⁴ C(=O)OR⁵, C(=O)NHR¹⁵, C(=O)NR⁵R⁶, OC(=O)CH₃, C(=O)OH, CN, Aryl, Hetaryl, C(=O)OR⁵OH, C(=O)OR⁵Si(OR⁵)₃, Halogen, NHC(O)H, P(=O)(OR⁷)₂. 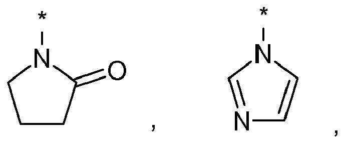
R⁵ C₁-C₂₀-Alkyl,
R¹⁵ C₁-C₂₀-Alkyl,
R⁶ C₁-C₂₀-Alkyl,
R⁷ H, C₁-C₂₀-Alkyl,
wobei die Substituenten R⁵, R⁶, R⁷ und R¹⁵ jeweils an beliebiger Position durch ein oder mehrere Heteroatome unterbrochen sein können, wobei die Anzahl dieser Heteroatome nicht mehr als 10 beträgt, und/oderjeweils an beliebiger Position, allerdings nicht mehr als fünfmal durch NR⁸R⁹, C(=O)NR⁸R⁹, C(=O)R¹⁰, C(=O)OR¹⁰, SO₃R¹⁰, CN, NO₂, C₁-C₂₀-Alkyl, C₁-C₂₀-Alkoxy, Aryl, Aryloxy, Heterocyclen, Heteroatome oder Halogen substituiert sein können, wobei diese ebenfalls maximal zweimal mit den genannten Gruppen substituiert sein können,
R⁸, R⁹, R¹⁰ unabhängig voneinander, gleich oder verschieden, H, C₁-C₂₀-Alkyl, C₂-C₂₀-Alkenyl, C₂-C₂₀-Alkinyl, C₃-C₁₅-Cycloalkyl, Aryl.

5. Verfahren gemäß einem der Ansprüche 1 bis 4, **dadurch gekennzeichnet, dass** die Übergangsmetallkomponente (B) Kupfer (Cu) in Form von Cu(I), Cu(II) oder Mischungen aus diesen enthält.

6. Verfahren gemäß einem der Ansprüche 3 bis 5, **dadurch gekennzeichnet, dass** der mindestens eine Initiator ausgewählt ist aus der Gruppe bestehend aus organischen Bromiden und das Gemisch (G) als organische Komponente (A) das bei der radikalischen Polymerisation erhaltene Polymer enthält, das mindestens eine Brom-Kohlenstoffbindung aufweist.

7. Verfahren gemäß einem der Ansprüche 1 bis 6, **dadurch gekennzeichnet, dass** die Polyacrylsäurekomponente (C) erhältlich ist durch Polymerisation einer Monomerlösung oder Monomersuspension enthaltend:
i) mindestens ein ethylenisch ungesättigtes, säuregruppentragendes Monomer, das zumindest teilweise neutralisiert sein kann,
ii) mindestens eines Vernetzers,
iii) mindestens eines Initiators,
iv) optional ein oder mehrerer mit den unter i) genannten Monomeren copolymerisierbare ethylenisch ungesättigte Monomere und
v) optional ein oder mehrere wasserlösliche Polymere.

8. Verfahren gemäß einem der Ansprüche 1 bis 7, **dadurch gekennzeichnet, dass** die Mischung (M) die Polyacrylsäurekomponente (C) und Zink in Gewichtsverhältnissen im Bereich von 1 : 1 bis 10 : 1 enthält.

9. Verfahren gemäß einem der Ansprüche 1 bis 8, **dadurch gekennzeichnet, dass** die Mischung (M) in Form einer stationären Phase eingesetzt wird, auf die das Gemisch (G) zum Inkontaktbringen aufgetragen wird.

10. Verfahren gemäß Anspruch 9, **dadurch gekennzeichnet, dass** das Gemisch (G) durch ein Elutionsmittel durch die stationäre Phase eluiert wird.

11. Verfahren gemäß einem der Ansprüche 9 oder 10, **dadurch gekennzeichnet, dass** das Elutionsmittel 15 bis 25 Gew.-% Wasser und 75 bis 85 Gew.-% eines organischen Lösungsmittels enthält.

12. Verfahren gemäß einem der Ansprüche 10 oder 11, **dadurch gekennzeichnet, dass** nach dem Eluieren ein Eluat erhalten wird, das eine organische Komponente (A1) enthält, die im Wesentlichen keine Halogen-Kohlenstoffverbindungen aufweist und im Wesentlichen frei von der Übergangsmetallkomponente (B) ist.
